# EUROPEAN PATENT APPLICATION

(11) **EP 1 613 064 A1**
(43) Date of publication of application: **04.01.2006**
(21) Application number: 05105825.3
(22) Date of filing: 29.06.2005
(51) Int. Cl.: H04N 5/44, H04N 5/46

(54) **Broadcast receiving apparatus and broadcast receiving method**

(30) Priority: 30.06.2004 JP 2004194310; 05.08.2004 JP 2004229723; 28.12.2004 JP 2004381560
(71) Applicant: Kabushi Kaisha Toshiba, Tokyo 105-8001 (JP)
(72) Inventor: Oohata, Tooru Toshiba Corporation, Tokyo 105-8001 (JP); Kobayashi, Masahiro Toshiba Corporation, Tokyo 105-8001 (JP); Sakamoto, Noriaki Toshiba Corporation, Tokyo 105-8001 (JP)
(74) Representative: Henkel, Feiler & Hänzel

(57) **Abstract**

A broadcast receiving apparatus of the invention comprises a tuner section (18) which generates an intermediate frequency signal based on an intermediate frequency setting signal from a received broadcast signal, a filter section (19) which allows the generated intermediate frequency signal to pass through, a demodulating section (20) which carries out demodulation processing based on the intermediate frequency setting signal upon the intermediate frequency signal having passed through the filter section (19), and a control section (23) which, after information about a place in which the broadcast signal is received is input, reads an intermediate frequency setting signal stored in a memory (24) preliminarily corresponding to the place in which the information is input and supplies the signal to the tuner section (18) and the demodulating section (20).

## Description

The present invention relates to a broadcast receiving apparatus and broadcast receiving method for receiving, for example, analog TV broadcasts, and more particularly to a broadcast receiving apparatus and broadcast receiving method compatible with worldwide broadcast programs not limited to any particular country or region.

As is well known, the intermediate frequencies of tuners for analog TV broadcasts are different depending on country and region because of legal restrictions. For example, in Europe, the US and Japan, the frequency is 38.9 MHz and in China and other Asian countries, it is 38.0 MHz.

Thus, currently, tuner types handling each of the available intermediate frequencies are prepared, and a method of supplying a machine type compatible with a destination country and a method of selling a machine type corresponding to a user's region have been adopted.

However, these methods have a problem in that the supply system of the tuner to users becomes complicated and users cannot use their purchased tuner if they bring it to a region whose intermediate frequency is different.

Jpn. Pat. Appln. KOKAI Publication No. 2000-40977 discloses a frequency converter which converts intermediate frequency TV signals to low frequency using a mixer and Jpn. Pat. Appln. KOKAI Publication No. 9-205593 discloses a circuit which performs digital filtering an intermediate frequency video signal.

However, there two publications describe nothing about a method for facilitating supply of the tuner to users to meet the fact that the intermediate frequency of the tuner must differ depending on the country or region.

Accordingly, the present invention has been achieved in consideration of the above-described circumstances and an object of the present invention is to provide a broadcast receiving apparatus and a broadcast receiving method capable of handling different intermediate frequencies easily without the support of other devices and further facilitating the supply of the apparatus to users, thereby promoting practical use thereof.

According to one aspect of the present invention, there is provided a broadcast receiving apparatus comprising: a receiving section configured to receive a broadcast signal; a tuner section configured to convert a frequency of the broadcast signal received by the receiving section into an intermediate frequency signal having a frequency designated by an intermediate frequency setting signal; a filter section configured to allow the intermediate frequency signal generated in the tuner section to pass through; a demodulating section configured to carry out demodulation of the intermediate frequency signal based on the intermediate frequency setting signal; a memory section configured to store information of the intermediate frequency setting signal corresponding to region where the receiving apparatus practicable; and a control section configured to read the information of the intermediate frequency setting signal corresponding to specific region from the memory section, the specific region is selected by a user, and supply the signal to the tuner section and the demodulating section.

According to another aspect of the present invention, there is provided a broadcast receiving method comprising: a first step of receiving a broadcast signal; a second step of generating an intermediate frequency signal having a frequency based on an intermediate frequency setting signal from the received broadcast signal; a third step of allowing the generated intermediate frequency signal to pass through a filter; a fourth step of carrying out demodulation processing based on the intermediate frequency setting signal upon the intermediate frequency signal having passed through the filter; and a fifth step of, after inputting information about a place in which the broadcast signal is received, reading the intermediate frequency setting signal stored in a memory preliminarily corresponding to the place in which the information is input and applying the intermediate frequency setting signal to processing in the second and fourth steps.
FIG. 1 is a perspective view of the appearance of a broadcast receiving apparatus according to an embodiment of the present invention;
FIG. 2 is a block diagram for explaining the signal processing system of the broadcast receiving apparatus of the embodiment;
FIG. 3 is a characteristic diagram for explaining the frequency characteristic of a band-pass filter of the broadcast receiving apparatus of the embodiment;
FIG. 4 is a block diagram for explaining the details of a tuner section of the broadcast receiving apparatus of the embodiment;
FIG. 5 is a block diagram for explaining the details of a demodulating section of the broadcast receiving apparatus of the embodiment;
FIG. 6 is a flowchart for explaining an intermediate frequency setting operation of the broadcast receiving apparatus of the embodiment;
FIG. 7 is a view for explaining an example of an intermediate frequency setting screen used in the intermediate frequency setting operation of the embodiment;
FIG. 8 is a block diagram for explaining a first modification of the broadcast receiving apparatus of the embodiment;
FIG. 9 is a block diagram for explaining a second modification of the broadcast receiving apparatus of the embodiment;
FIG. 10 is a block diagram for explaining a third modification of the broadcast receiving apparatus of the embodiment;
FIG. 11 is a block diagram for explaining a fourth modification of the broadcast receiving apparatus of the embodiment;
FIG. 12 is a block diagram for explaining a fifth modification of the broadcast receiving apparatus of the embodiment;
FIG. 13 is a block diagram for explaining a sixth modification of the broadcast receiving apparatus of the embodiment;
FIG. 14 is a view for explaining a personal computer to which a tuner module of the embodiment is applied; and
FIG. 15 is a view for explaining a portable phone to which the tuner module of the embodiment is applied.

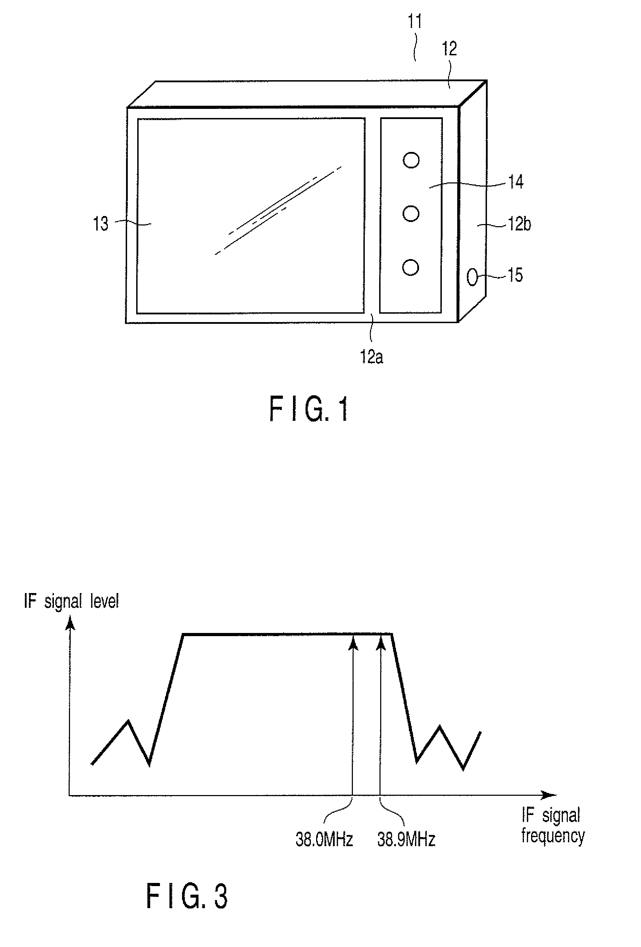

Hereinafter, an embodiment of the present invention will be described in detail with reference to the accompanying drawings. FIG. 1 shows the appearance of a broadcast receiving apparatus 11 of the embodiment. The broadcast receiving apparatus 11 has a portable thin box-shaped case 12.

The case 12 of the broadcast receiving apparatus 11 has a display section 13 and an operating section 14 on one flat portion 12a thereof and a connector 15 for audio output to be connected to a headphone or the like is provided on a side face 12b.

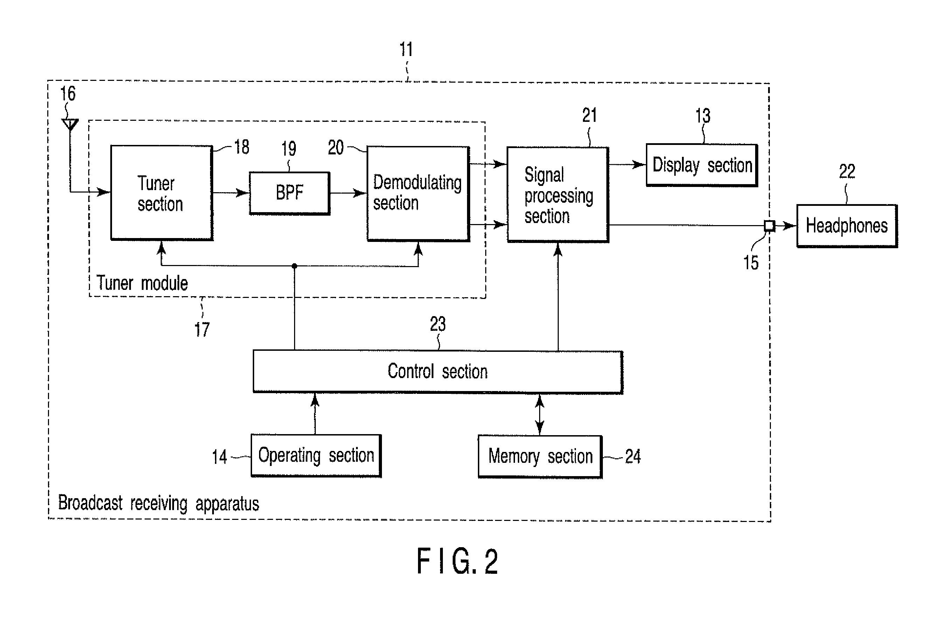

FIG. 2 shows a signal processing system of the broadcast receiving apparatus 11. That is, a TV broadcast signal received by an antenna 16 incorporated in the case 12 is supplied to a tuner module 17.

The tuner module 17 has a tuner section 18, a band-pass filter (BPF) 19 and a demodulating section 20. Then, the tuner section 18 converts an inputted TV broadcasting signal to an intermediate frequency (IF) signal having a predetermined intermediate frequency and outputs to the BPF 19.

The BPF 19 allows modulated wave components satisfying some extent of signal-to-noise ratio of the input IF signal to pass and outputs to the demodulating section 20. Then, the demodulating section 20 generates a base band video signal and audio signal before demodulation from the input IF signal.

In this way, the video signal and the audio signal outputted from the tuner module 17 are supplied to a signal processing section 21. After converting the input video signal to a format suitable for representation on the display section 13, the signal processing section 21 outputs to the display section 13 for representation.

The signal processing section 21 executes demodulation processing on the inputted audio signal and then, outputs to headphones connected from outside through the connector 15 for audio reproduction.

The broadcast receiving apparatus 11 is controlled totally by a control section 23 about its all operations including the above-described receiving operation. The control section 23 incorporates a central processing unit (CPU) or the like, and receives operation information from the operating section 14 in order to control the respective sections so that the content of that operation information is reflected thereon.

In this case, the control section 23 uses a memory section 24. That is, the memory section 24 includes mainly a read only memory storing a control program to be executed by the CPU of the control section 23, a read-out write memory which provides a work area to that CPU and a nonvolatile memory storing various kinds of setting information including intermediate frequency setting signal described later, control information and the like.

Here, as the aforementioned tuner section 18, for example, a silicon tuner is used. The tuner section 18 is capable of selectively setting the intermediate frequency of the IF signal to 38.9 MHz or 38.0 MHz based on the intermediate frequency setting signal supplied from the control section 23 through, for example, a control bus such as IIC.

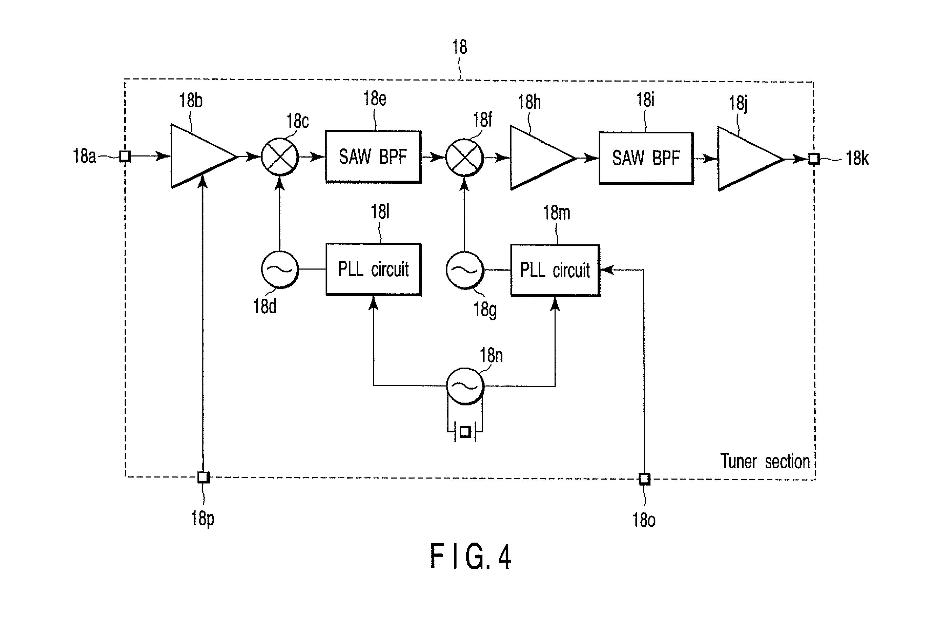

As the BPF 19, for example, a digital demodulation surface acoustic wave (SAW) filter is used. The BPF 19 allows the IF signals of two intermediate frequencies, 38.9 MHz and 38.0 MHz, to pass through as shown in FIG. 3.

Further, the BPF 19 is set so that its frequency characteristic has no Nyquist slope characteristic so as to be able to supply modulated wave components satisfying some extent of signal-to-noise ratio to a demodulating section 20 located on a post stage.

In the demodulating section 20, an internal clock is controlled so that demodulation processing corresponding to the IF signal of the intermediate frequency set by the tuner section 18 can be carried out from the control section 23 based on the intermediate frequency setting signal supplied through a control bus such as IIC.

Because the tuner module 17 is capable of meeting the IF signals of two intermediate frequencies, 38.0 MHz and 38.9 MHz, based on the intermediate frequency setting signal output from the control section 23, the broadcast receiving apparatus 11 can be supplied more easily to users and this is adaptable for practical use.

FIG. 4 shows the details of the tuner section 18. That is, TV broadcast signal received by the antenna 16 is supplied to a frequency mixer 18c through an input terminal 18a and a gain variable amplifier 18b.

The frequency mixer 18c shifts input TV broadcast signal of 50-870 MHz to 1.2 GHz by mixing with local oscillation signal output from a local oscillator 18d.

Then, a high frequency signal outputted from the frequency mixer 18c is supplied to a frequency mixer 18f through a SAW BPF 18e. The frequency mixer 18f converts the input high-frequency signal to an IF signal of 38.9 MHz or 38.0 MHz by mixing with a local oscillation signal output from a local oscillator 18g.

Thereafter, the IF signal output from the frequency mixer 18f is fetched out from an output terminal 18k through an amplifier 18h, a SAW BPF 18i and an amplifier 18j and output to the BPF 19.

In the local oscillators 18d, 18g, their oscillation frequencies are controlled by phase-locked loop (PLL) circuits 181, 18m. Further, an output of a reference oscillator 18n is supplied to these PLL circuits 181, 18m as a reference signal.

An intermediate frequency setting signal output from the control section 23 is supplied to the PLL circuit 18m through a control terminal 18o. In the PLL circuit 18m, its division ratio is changed based on the intermediate frequency setting signal supplied from the control section 23 and the frequency of a local oscillation signal output from the local oscillator 18g is changed based thereon. As a consequence, IF signals of 38.9 and 38.0 MHz can be selectively generated from the frequency mixer 18f.

A gain adjustment signal output from the demodulating section 20 is supplied to the gain variable amplifier 18b through a control terminal 18p. In the gain variable amplifier 18b, its gain is changed based on the gain adjustment signal output from the demodulating section 20 and automatic gain adjustment of the tuner module 17 is carried out.

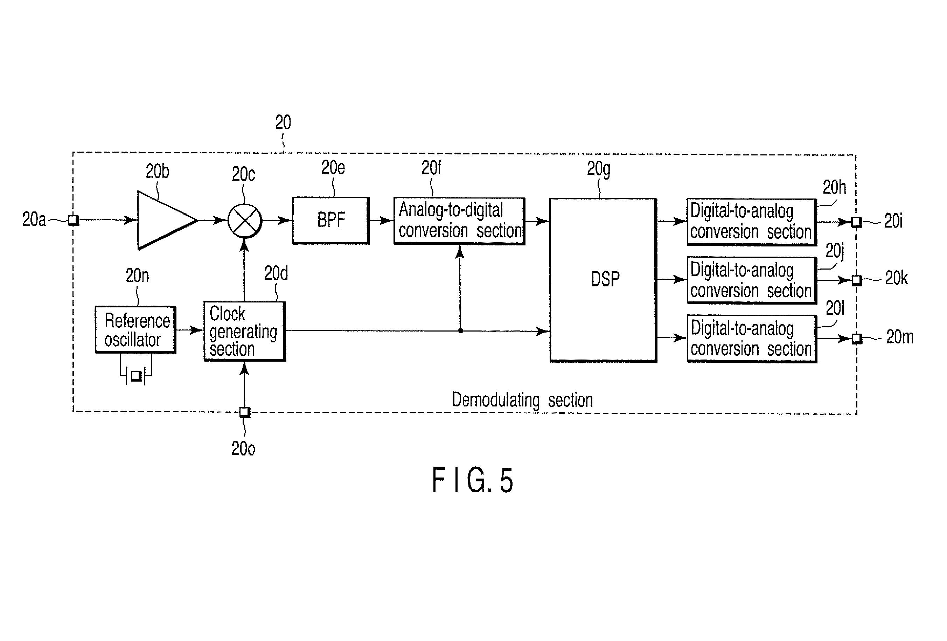

FIG. 5 shows the details of the demodulating section 20. The IF signal of 38.9 or 38.0 MHz outputted from the BPF 19 is supplied to a frequency mixer 20c through an input terminal 20a and an amplifier 20b.

The frequency mixer 20c converts the inputted IF signal to a frequency operable with the digital signal processor (DSP) 20 located at a post stage by mixing with a clock signal output from a clock generating section 20d.

After passing a BPF 20e, the IF signal output from the frequency mixer 20c is digitized by an analog-to-digital converter 20f driven based on the clock signal output from the clock generating section 20d and supplied to a DSP 20g.

The DSP 20g generates a gain adjustment signal to be given to the gain variable amplifier 18b, video signal of baseband and audio signal prior to demodulation from the input IF signal based on the clock signal output from the clock generating section 20d.

Then, the gain control signal, after being converted to an analog signal by a digital-to-analog converter 20h, is supplied to the gain variable amplifier 18b through an output terminal 20i and the control terminal 18p of the tuner section 18.

The video signal, after being converted to an analog signal by a digital-to-analog converter 20j, is supplied to the signal processing section 21 through an output terminal 20k. Further, the audio signal, after converted to an analog signal by a digital-to-analog converter 201, is supplied to the signal processing section 21 through an output terminal 20m.

The clock generating section 20d generates a clock signal based on a reference oscillation signal outputted from a reference oscillator 20n. An intermediate frequency setting signal output from the control section 23 is supplied to the clock generating section 20d through a control terminal 20o.

The clock generating section 20d controls the frequency of the clock signal based on the intermediate frequency setting signal supplied from the control section 23 so that the analog-to-digital converter 20f and the DSP 20g can execute analog-to-digital conversion processing and demodulation processing upon the IF signal of an intermediate frequency set by the tuner section 18.

Whether the intermediate frequency is set to 38.9 or 38.0 MHz can be set by a user when channel scanning of automatically retrieving a receivable channel by scanning a reception frequency band in succession continuously is demanded.

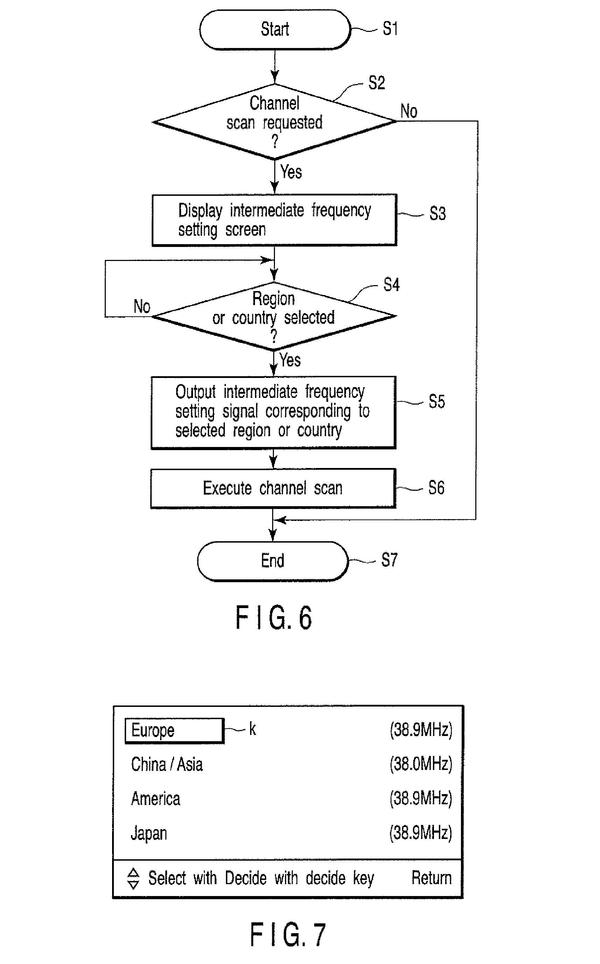

FIG. 6 shows a flowchart summarizing the setting operation of the intermediate frequency. First, if the processing is started (step S1), the control section 23 determines whether or not channel scan is requested in step S2 and if it is determined that the channel scan is not requested (NO), the processing is terminated (step S7).

If it is determined that the channel scan is requested in step S2 (YES), the control section 23 indicates an intermediate frequency setting screen on the display section 13 in step S3. The intermediate frequency setting screen lists regions and countries as shown in FIG. 7.

Then, a user selects a place where the broadcast receiving apparatus 11 is to be used, that is, a region or country corresponding to the place where the broadcast receiving apparatus 11 is currently installed from the listed regions and countries. The selection is carried out by moving a cursor k on the screen by operating the operating section 14, and then operating a decision key.

Thereafter, the control section 23 waits until a region or a country is selected from the intermediate frequency setting screen by the user in step S4, and if it is determined that a region or a country is selected (YES), an intermediate frequency setting signal corresponding to the intermediate frequency of the selected region or country is read out from the memory 24 in step S5 and output to the tuner section 18 and the demodulating section 20.

Consequently, in the tuner module 17, an intermediate frequency handled thereby is determined. If the intermediate frequency is determined in this way, the control section 23 executes the channel scan in step S6 and terminates the processing (step S7).

According to the above-described embodiment, since the tuner module 17 is capable of meeting the IF signals of two intermediate frequencies, 38.9 and 38.0 MHz, based on the intermediate frequency setting signal output from the control section 23, the broadcast receiving apparatus can be supplied to users easily and the apparatus is adaptable for practical use.

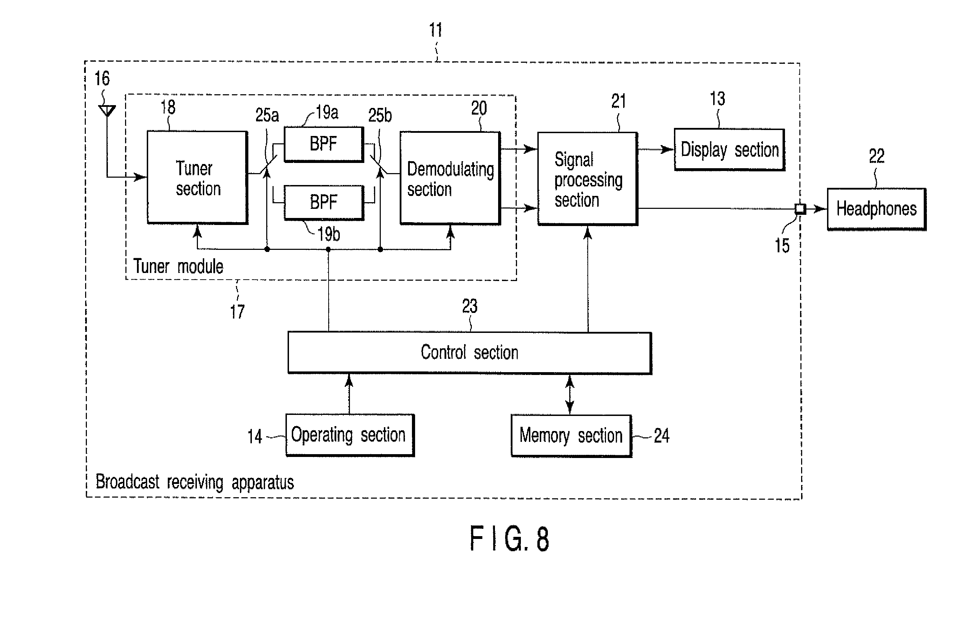

FIG. 8 shows a first modification of the above embodiment. If FIG. 8 is explained with the same reference numerals given to the same components, in the tuner module 17, a BPF 19a for 38.9 MHz and a BPF 19b for 38.0 MHz are prepared. By using switches 25a, 25b selectable depending on the intermediate frequency setting signal, a necessary BPF 19a or 19b is used. Under such a structure, the same operation as the broadcast receiving apparatus 11 shown in FIG. 2 is carried out and the same effect can be obtained.

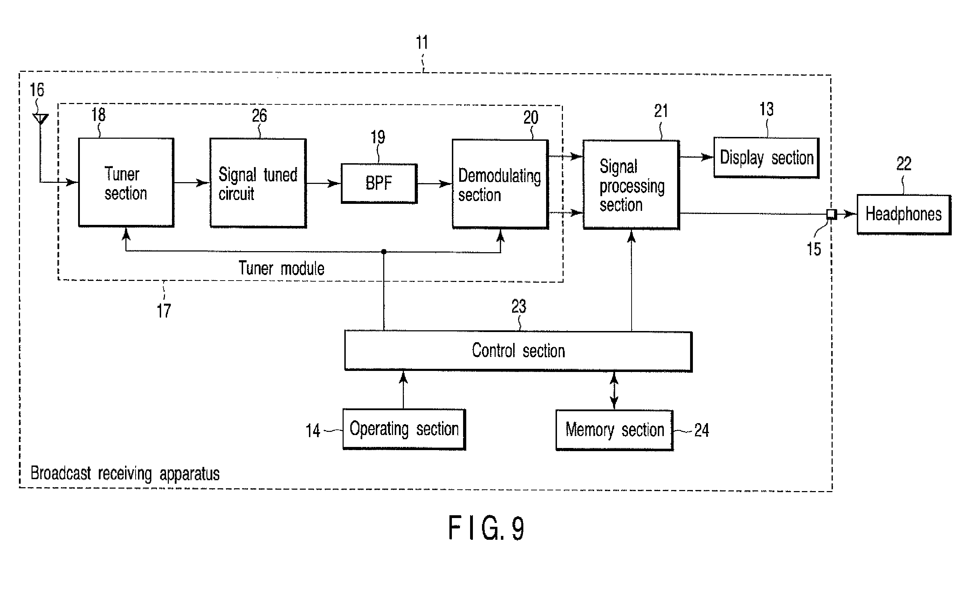

FIG. 9 shows a second modification of the above embodiment. If FIG. 19 is explained with the same reference numerals given to the same components, in the tuner module 17, a single tuned circuit 26 for the IF signal frequency output from the tuner section 18 is connected between the tuner section 18 and the BPF 19.

That is, if a multi-wave signal is inputted to the tuner section 18, a carrier wave level of a channel adjacent to or second adjacent to a receiving channel is output from the tuner section 18 without being damped because the band of the SAW BPF18e is about 20 MHz, and then input to the demodulating section 20 through the BPF 19.

Although the band characteristic of the IF signal outputted from the tuner section 18 is determined by a fore stage of the analog-to-digital converting section 20f in the demodulating section 20 on a post stage, the carrier of the adjacent channel is not damped so much in the preceding BPF 19. When there exists a difference in signal level between the adjacent channel and the second adjacent channel, if the level of a reception signal is low with respect to a jamming wave, jamming by interference occurs.

To solve the problem, by connecting the single tuned circuit 26 for the IF signal frequency between the tuner section 18 and the BPF 19, the signal levels of the adjacent channel and second adjacent channel can be suppressed, so that a performance resisting interference can be improved.

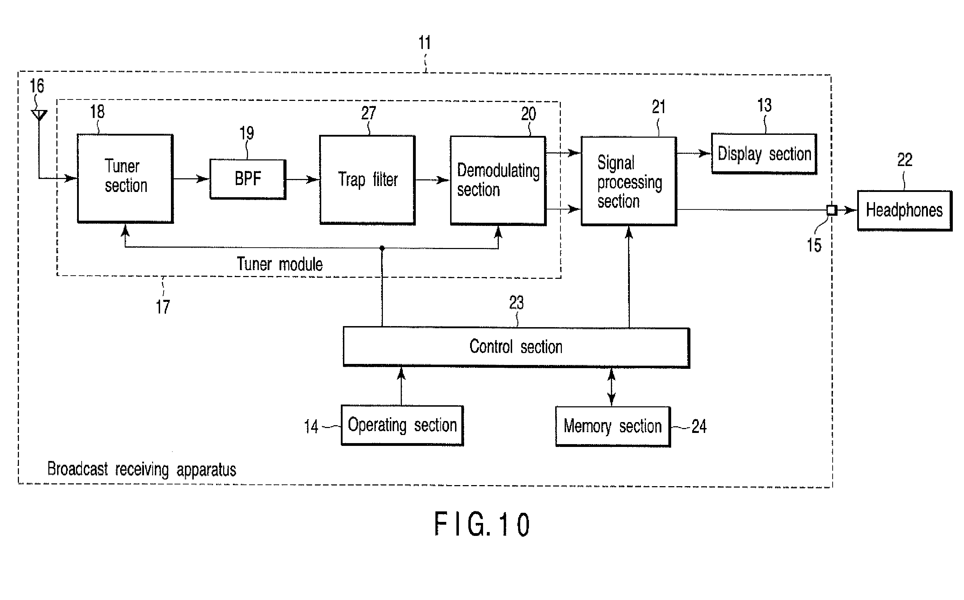

FIG. 10 shows a third modification of the above embodiment. If FIG. 10 is explained with the same reference numerals given to the same components, in the tuner module 17, a trap filter 27, which is a channel upper second adjacent to a receiving channel, is connected between the BFF 19 and the demodulating section 20.

If the multi-wave signal is input to the tuner section 18 as described above, the levels of channels adjacent to and second adjacent to the receiving channel is output from the tuner section 18 without being damped because the band of the SAW BPF 18e is about 20 MHz, and then input to the demodulating section 20 through the BPF 19.

Although the band characteristic of the IF signal output from the tuner section 18 is determined on a stage preceding the analog-to-digital converting section 20f in the demodulating section 20 on a post stage, the carrier of the adjacent channel is not damped so much in the preceding BPF 19. If the input IF signal is analog-to-digital converted under such a condition, the performance resisting interference in the vicinity of a channel upper second adjacent to the receiving channel is worsened by sampling distortion in the demodulating section 20.

To solve the problem, by connecting the trap filter 27 between the BPF 19 and the demodulating section 20, the signal component of the second adjacent channel can be suppressed, so that the performance resisting interference can be improved.

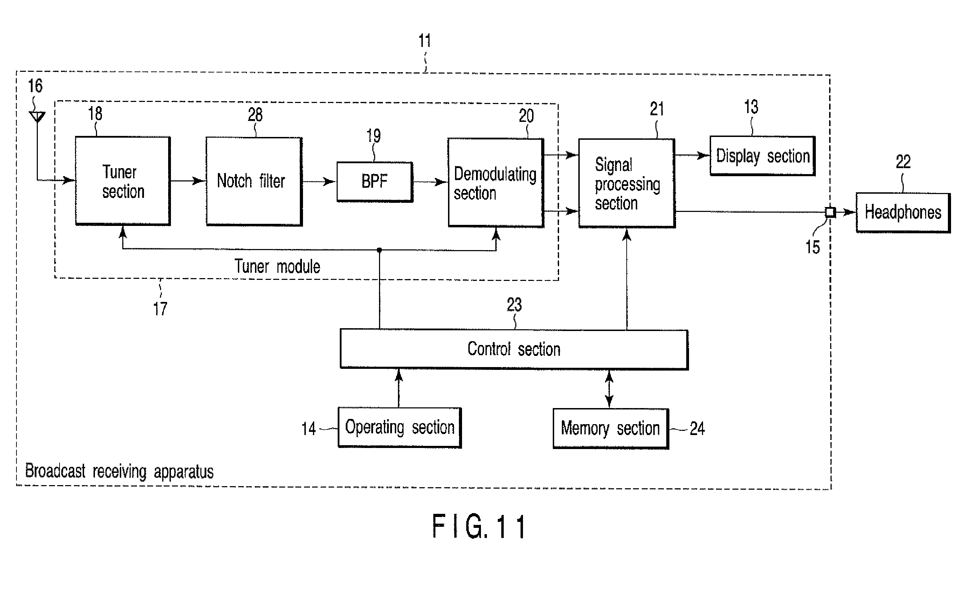

FIG. 11 shows a fourth modification of the above embodiment. If FIG. 11 is explained with the same reference numerals given to the same components, a notch filter 28, which is a channel upper second adjacent to the receiving channel, is connected between the tuner section 18 and the BPF 19 in the tuner module 17. With such a structure, the signal component of the channel upper second adjacent to the receiving channel can be suppressed like the third modification, thereby making it possible to improve the performance resisting interference.

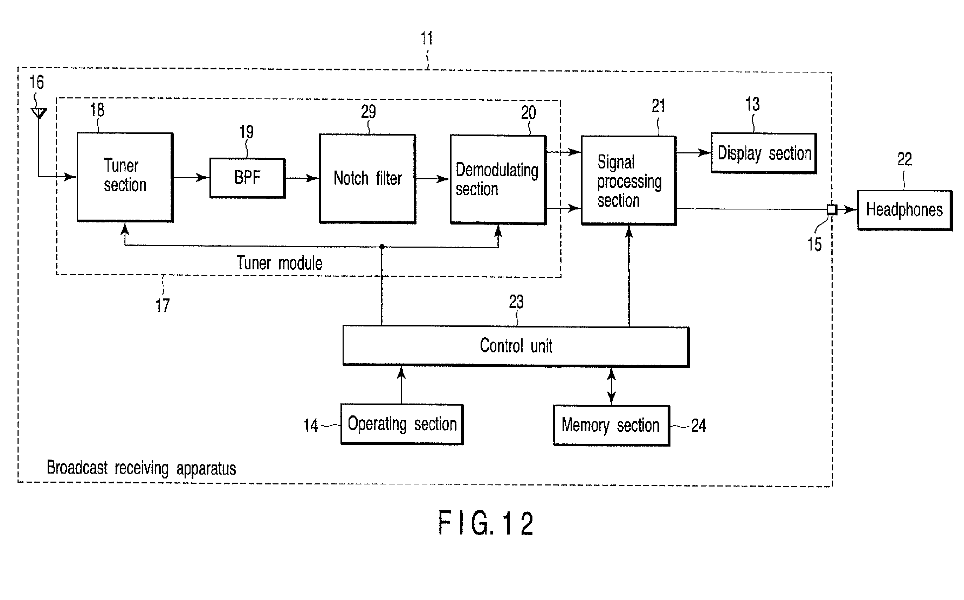

FIG. 12 shows a fifth modification of the above embodiment. If FIG. 12 is explained with the same reference numerals given to the same components, a notch filter 29, which is a channel upper second adjacent to the receiving channel, is connected between the BPF 19 and the demodulating section 20 in the tuner module 17. With such a structure, the signal component of the channel upper second adjacent to the receiving channel can be suppressed like the third modification, thereby making it possible to improve the performance resisting interference.

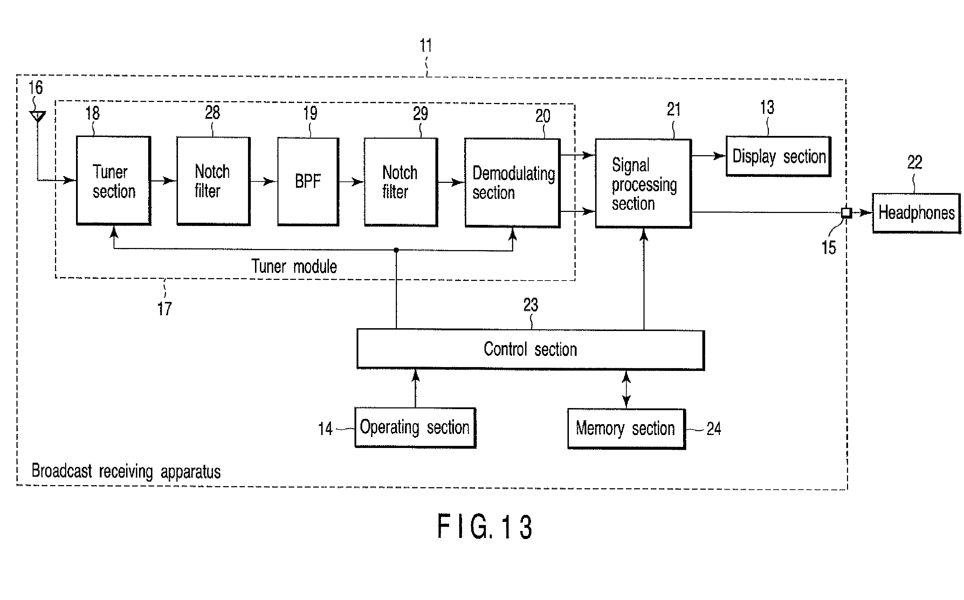

FIG. 13 shows a sixth modification of the above embodiment. If FIG. 13 is explained with the same reference numerals given to the same components, notch filters 28, 29, which are a channel upper second adjacent to the receiving channel, are connected between the tuner section 18 and the BPF 19 and between the BPF 19 and the demodulating section 20, respectively, in the tuner module 17. With such a structure, the signal component of the channel upper second adjacent to the receiving channel can be suppressed like the third modification, thereby making it possible to improve the performance resisting interference.

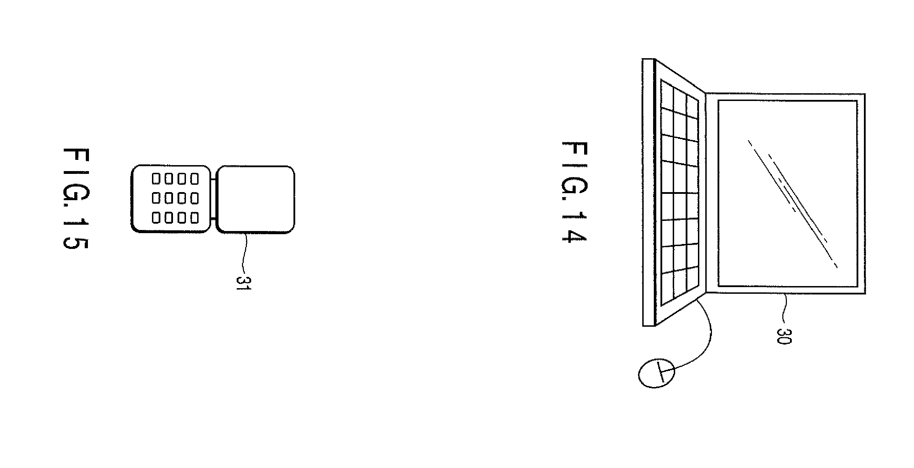

The above-mentioned tuner module 17 can be applied to a wide application field including the personal computer (PC) 30 shown in FIG. 14, the portable phone 31 shown in FIG. 15 and the like.

In the meantime, the present invention is not restricted to the above-described embodiments but upon carrying out the invention, the components of the invention can be modified within a scope not departing from the gist of the invention. Further, by combining plural components disclosed in the above-described embodiments appropriately, various kinds of other inventions can be formed. For example, it is permissible to erase some components from the all components disclosed in the embodiments.

## Claims

1. A broadcast receiving apparatus **characterized by** comprising:
a receiving section (16) configured to receive a broadcast signal;
a tuner section (18) configured to convert a frequency of the broadcast signal received by the receiving section (16) into an intermediate frequency signal having a frequency designated by an intermediate frequency setting signal;
a filter section (19) configured to allow the intermediate frequency signal generated in the tuner section (18) to pass through;
a demodulating section (20) configured to carry out demodulation of the intermediate frequency signal based on the intermediate frequency setting signal;
a memory section (24) configured to store information of the intermediate frequency setting signal corresponding to region where the receiving apparatus practicable; and
a control section (23) configured to read the information of the intermediate frequency setting signal corresponding to specific region from the memory section (24), the specific region is selected by a user, and supply the signal to the tuner section (18) and the demodulating section (20).

2. The broadcast receiving apparatus according to claim 1, **characterized in that** the tuner section (18) comprises:
a first converting section (18c) configured to mix the broadcast signal received by the receiving section (16) with a first local oscillation signal to convert to a signal having a frequency higher than the broadcast signal;
a second converting section (18f) configured to mix the signal output from the first converting section (18c) with a second local oscillation signal to convert to an intermediate frequency signal having a frequency lower than the broadcast signal; and
a frequency changing section (18m) configured to change the frequency of the second local oscillation signal used in the second converting section (18f) based on the intermediate frequency setting signal.

3. The broadcast receiving apparatus according to claim 1, **characterized in that** the demodulating section (20) comprises:
a third converting section (20c) configured to mix the intermediate frequency signal output from the filter section (19) with a clock signal to convert to a signal having a predetermined frequency;
an analog-to-digital converting section (20f) configured to digitize the signal output from the third converting section (20c) based on the clock signal;
a demodulating section (20g) configured to carry out demodulation processing upon the signal output from the analog-to-digital converting section (20f) based on the clock signal; and
a clock signal frequency changing section (20d) configured to change the frequency of the clock signal based on the intermediate frequency setting signal.

4. The broadcast receiving apparatus according to claim 1, **characterized in that** the filter section (19) is a SAW filter having a frequency characteristic of allowing intermediate frequency signals of all frequencies which are outputted from the tuner section (18) to pass through such that a predetermined signal-to-noise ratio is satisfied.

5. The broadcast receiving apparatus according to claim 1, **characterized in that** the filter section (19) comprises:
a plurality of filters (19a, 19b) configured to allow the intermediate frequency signals of all frequencies which are output from the tuner section (18) to pass through; and
switches (25a, 25b) configured to selectively connect the plurality of filters (19a, 19b) between the tuner section (18) and the demodulating section (20) based on the intermediate frequency setting signal.

6. The broadcast receiving apparatus according to claim 1, **characterized in that** the control section (23) comprises:
a display control section (23) configured to display an intermediate frequency setting screen listing plural regions or countries;
an operating section (14) configured to select and determine a predetermined region or country on the intermediate frequency setting screen displayed based on the display control section (23); and
a generating section (24) configured to generate an intermediate frequency setting signal corresponding to a predetermined region or country selected and determined by the operating section (14).

7. The broadcast receiving apparatus according to claim 1, **characterized in that** the control section (23) is configured to input information corresponding to a place in which the broadcast signal is received when channel scan is requested.

8. The broadcast receiving apparatus according to claim 1, **characterized in that** the intermediate frequency setting signal corresponds to any one of intermediate frequency signals of 38.0 and 38.9 MHz.

9. The broadcast receiving apparatus according to claim 1, **characterized in that** a single tuned circuit (26) for the intermediate frequency signal generated by the tuner section (18) is connected between the tuner section (18) and the filter section (19).

10. The broadcast receiving apparatus according to claim 1, **characterized in that** a trap filter (27), which is a channel upper second adjacent to a receiving channel, is connected between the filter section (19) and the demodulating section (20).

11. The broadcast receiving apparatus according to claim 1, **characterized in that** notch filters (28, 29), which are a channel upper second adjacent to a receiving channel, are connected between the tuner section (18) and the filter section (19) and/or between the filter section (19) and the demodulating section (20).

12. A tuner module **characterized by** comprising:
a receiving section (16) configured to receive a broadcast signal;
a tuner section (18) configured to generate an intermediate frequency signal having a frequency based on an intermediate frequency setting signal supplied from outside from the broadcast signal received by the receiving section (16);
a filter section (19) configured to allow the intermediate frequency signal generated by the tuner section (18) to pass through; and
a demodulating section (20) configured to carry out demodulation processing based on the intermediate frequency setting signal supplied from outside upon the intermediate frequency signal having passed through the filter section (19).

13. A broadcast receiving method **characterized by** comprising:
a first step (16) of receiving a broadcast signal;
a second step (18) of generating an intermediate frequency signal having a frequency based on an intermediate frequency setting signal from the received broadcast signal;
a third step of allowing the generated intermediate frequency signal to pass a filter (19);
a fourth step (20) of carrying out demodulation processing based on the intermediate frequency setting signal upon the intermediate frequency signal having passed through the filter (19); and
a fifth step (23) of, after inputting information about a place in which the broadcast signal is received, reading the intermediate frequency setting signal stored in a memory (24) preliminarily corresponding to the place in which the information is input and applying the intermediate frequency setting signal to processing in the second and fourth steps (18, 20).

14. The broadcast receiving method according to claim 13, **characterized in that** the fifth step (23) comprises:
steps (23, S2, S3) of displaying an intermediate frequency setting screen listing plural regions or countries when channel scan is requested;
steps (14, S4) of executing an operation for selecting and determining a predetermined region or country on the displayed intermediate frequency setting screen; and
steps (24, S5) of generating an intermediate frequency setting signal corresponding to a predetermined region or country selected and determined.
